# EUROPÄISCHE PATENTSCHRIFT

(11) **EP 1 935 764 B1**
(45) Veröffentlichungstag und Bekanntmachung des Hinweises auf die Patenterteilung: **27.04.2011**
(21) Anmeldenummer: 07021093.5
(22) Anmeldetag: 29.10.2007
(51) Int. Cl.: B62D 35/00, B62D 37/02

(54) **Luftleiteinrichtung für ein Kraftfahrzeug**
Air guiding device for a motor vehicle
Dispositif de guidage d'air pour un véhicule automobile

(30) Priorität: 21.12.2006 DE 102006060672
(43) Veröffentlichungstag der Anmeldung: 25.06.2008
(73) Patentinhaber: Dr. Ing. h.c. F. Porsche AG, 70435 Stuttgart (DE)
(72) Erfinder: Hoelzel, Steffen, 71254 Ditzingen (DE)

(56) Entgegenhaltungen:
- DE-A1- 3 630 645
- DE-A1- 10 160 748
- FR-A- 2 540 813
- GB-A- 2 017 023

## Beschreibung

Bei der Erfindung wird ausgegangen von einer Luftleiteinrichtung für ein Kraftfahrzeug, gemäß Oberbegriff des Patentanspruchs 1.

Eine gattungsgemäße Luftleiteinrichtung ist aus der DE 36 30 645 C2 bekannt. Diese Luftleiteinrichtung für ein Kraftfahrzeug umfasst eine sich am Fahrzeugbug in Fahrzeugquerrichtung erstreckende Spoilerlippe, die über ein Betätigungselement aus einer eingefahrenen Ruhestellung in eine ausgefahrene Wirkstellung, in der sie eine aerodynamische Wirkung aufbaut, bewegt werden kann. Das Betätigungselement ist als flexibler, aufblasbarer Schlauch ausgebildet, der in seinem aufgeblasenen Zustand die Spoilerlippe in der Wirkstellung hält. Wird der Schlauch entleert bzw. druckentlastet, kann er sich aufgrund seiner flexiblen Eigenschaften zusammenfalten und die Spoilerlippe kann durch eine Rückstelleinrichtung wieder in ihre Ruhestellung gebracht werden. Bei der bekannten Luftleiteinrichtung wird die Rückstelleinrichtung von einer Feder gebildet, die mit ihrem einen Ende am Fahrzeugaufbau und mit ihrem anderen Ende an der Spoilerlippe bzw. an dem Betätigungselement befestigt ist. Beim Ausfahren in die Wirkstellung wird die Feder gespannt und nach einer Druckentlastung des pneumatischen Betätigungselements entspannt sich die Feder wieder und zieht die Spoilerlippe in ihre Ruhestellung. In der Ruhestellung wird die Spoilerlippe von der Feder gehalten, die somit auch ein Haltemittel für die Spoilerlippe in der Ruhestellung bildet. Nachteilig bei dieser Luftleiteinrichtung ist jedoch, dass sich durch die elastische Ausführung des Haltemittels die Spoilerlippe in der Ruhestellung zumindest leicht bewegen oder sogar schwingen kann, was einerseits dazu führt, dass sie auch in Ruhestellung eine gewisse aerodynamische, jedoch unerwünschte Wirkung entfaltet und es außerdem zu einer Geräuschbildung kommen kann, wenn die Spoilerlippe im Fahrbetrieb gegen das Fahrzeug schwingt. Zudem kann die Feder plastisch deformiert werden, wenn die Spoilerlippe nach vorn umklappt, was beispielsweise stattfinden kann, wenn ein Hindernis rückwärts überfahren wird. Eine derart deformierte Feder führt zu einem vollständigen Versagen dieser bekannter Luftleiteinrichtung.

Eine ähnliche Ausgestaltung einer Luftleiteinrichtung ist außerdem aus der DE 101 60 748 A1 bekannt, nach der das flexible, aufblasbare Betätigungselement durch einen Schlauch mit zumindest einer Kammer gebildet wird. Die Rückstelleinrichtung wird bei dieser bekannten Spoilerlippe dadurch realisiert, dass in der elastisch dehnbaren Spoilerlippe selbst - beim Bewegen von der Ruhestellung in die ausgefahrene Wirkstellung - Rückstellkräfte aufgebaut werden, die bei einer Druckentlastung des Schlauches dafür sorgen, dass die Spoilerlippe wieder in die Ruhestellung zurückbewegt wird. Außerdem wird ein Haltemittel für die Spoilerlippe dadurch gebildet, dass sie bereits in ihrer Ruhestellung unter Vorspannung an der Frontpartie anliegt. In analoger Weise wie zu der aus der DE 36 30 645 C2 bekannten Luftleiteinrichtung ist auch hier das Haltemittel elastisch, nämlich durch die dehnbare Spoilerlippe selbst, gebildet, wodurch sich in manchen Fällen ähnliche Probleme wie bei der vorstehend beschriebenen Luftleiteinrichtung ergeben können.

Es ist daher Aufgabe der Erfindung, eine Luftleiteinrichtung der eingangs genannten Art anzugeben, die die vorstehend erwähnten Nachteile nicht aufweist.

Gelöst wird diese Aufgabe mit einer Luftleiteinrichtung für ein Kraftfahrzeug, die die in Anspruch 1 genannten Merkmale umfasst. Ausgestaltungen der Erfindung sind Gegenstand der abhängigen Ansprüche.

Die mit der Erfindung im Wesentlichen erzielten Vorteile sind darin zu sehen, dass die Spoilerlippe die Ruhestellung sicher einnehmen kann und in der Ruhestellung nahezu bewegungslos gehalten wird, was mit dem mit der Spoilerlippe koppelbaren und entkoppelbaren Ruhestellungshalter erreicht wird, der unelastisch ausgeführt ist. Ganz allgemein könnte dieser Ruhestellungshalter beispielsweise nach Art eines Schlosses einen Formschluss mit der Spoilerlippe eingehen oder aufgrund eines Kraftschlusses die Spoilerlippe in der Ruhestellung sicher halten. Soll die Spoilerlippe von der Ruhestellung in die ausgefahrene Wirkstellung bewegt werden, wird der Ruhestellungshalter von der Spoilerlippe entkoppelt und anschließend das Betätigungselement aktiviert. In umgekehrter Bewegungsrichtung wird der Ruhestellungshalter mit der Spoilerlippe wieder gekoppelt, wenn die Spoilerlippe ihre Ruhestellung eingenommen hat, in die sie mittels der Rückstelleinrichtung verlagert wurde. Mit dem erfindungsgemäßen Ruhestellungshalter wird also die Spoilerlippe in Ruhestellung unabhängig von den aufgebrachten Rückstellkräften durch die Rückstelleinrichtung sicher gehalten, so dass Bauteil und Lagetoleranzen ohne Einfluss auf die gezielt vorgegebene Ruhestellung der Spoilerlippe bleiben. Insbesondere durch den Werkstoff für die Spoilerlippe bedingte Alterungs- und Relaxationserscheinungen, die zu einer Veränderung der Höhe der Rückstellkräften beitragen können, üben somit im Wesentlichen keinen Einfluss auf die Ruhestellung der Spoilerlippe aus. Außerdem wird mit dem Ruhestellungshalter erreicht, dass in der eingefahrenen Ruhestellung die Spoilerlippe keine oder jedenfalls eine gleich bleibende Aerodynamik für das Kraftfahrzeug bewirkt, und zwar auch dann, wenn das Kraftfahrzeug mit unterschiedlichen Geschwindigkeiten bewegt wird, solange die Spoilerlippe in der Ruhestellung gehalten ist.

Besonders bevorzugt wird ein Ausführungsbeispiel gemäß Anspruch 2, wonach der Ruhestellungshalter die Spoilerlippe in der Ruhestellung gegen einen Endanschlag hält, insbesondere dann, wenn der Ruhestellungshalter aufgrund einer Krafteinwirkung die Spoilerlippe in der Ruhestellung fixieren soll.

Besonders bevorzugt wird entsprechend Anspruch 3 der erfindungsgemäße Ruhestellungshalter bei einer Luftleiteinrichtung eingesetzt, bei der die Rückstelleinrichtung durch die sich bei der Ausfahrbewegung dehnende Spoilerlippe selbst gebildet wird, also die Rückstellkräfte in der Spoilerlippe aufgebaut werden.

Gemäß einem in Anspruch 4 angegebenen Ausführungsbeispiel erfasst der Ruhestellungshalter die Spoilerlippe während ihrer Einfahrbewegung bereits kurz vor ihrer endgültigen Ruhestellung, also in einer Teilstellung, und zieht diese gegen den Endanschlag, oder der Ruhestellungshalter wird erst mit der Spoilerlippe gekoppelt, wenn diese ihre endgültige Ruhestellung erreicht hat.

Nach einem besonders bevorzugten Ausführungsbeispiel entsprechend Anspruch 5 ist der Ruhestellungshalter als ein zumindest magnetisches oder magnetisierbares Halteelement ausgeführt, welches mit seiner magnetischen Wirkung die Spoilerlippe erfasst und in der Ruhestellung hält, wobei die Spoilerlippe zumindest ein magnetisches oder magnetisierbares Gegenelement aufweist. Insbesondere ist es dadurch möglich, mit der magnetischen Kraft die Spoilerlippe bereits in der vorstehend erwähnten Teilstellung zu erfassen und vollständig in die Ruhestellung zu ziehen, vorzugsweise gegen den vorstehend beschriebenen Endanschlag, der Gegenstand des Anspruchs 7 ist. Überdies ergibt sich durch das die magnetische Wirkung entfaltende Halteelement auf einfache Art und Weise die Möglichkeit, den Ruhestellungshalter mit der Spoilerlippe in der Ruhestellung oder der Teilstellung zu koppeln und für die Ausfahrbewegung der Spoilerlippe wieder von dieser zu entkoppeln, da von dem Betätigungselement lediglich eine größere Kraft als die magnetische Haltekraft aufgebracht werden muss. Alternativ könnte die magnetische Wirkung auch an- und ausschaltbar bzw. aktivierbar und deaktivierbar ausgeführt sein, wie in Anspruch 8 angegeben.

Nach einem gemäß Anspruch 6 angeführten Ausführungsbeispiel bildet das Halteelement selbst den Endanschlag, was insbesondere bei der Ausführung als magnetisches oder magnetisierbares Halteelement von Vorteil ist.

Nach einer Weiterbildung der Erfindung gemäß Anspruch 9 kann vorgesehen sein, dass das Halteelement, welches mit der Spoilerlippe koppelbar und von der Spoilerlippe entkoppelbar ist, an einem Stellelement befestigt ist und so aus einer eingefahrenen Endstellung in eine ausgefahrene Betriebsstellung und umgekehrt verlagert werden kann. Damit ist es möglich, die Position der Ruhestellung zu justieren. Andererseits ist es auch möglich, die Spoilerlippe bei ausgefahrenem Halteelement bereits in der Teilstellung zu erfassen und durch Zurückbewegen des Halteelements in seine Endstellung die Spoilerlippe in die Ruhestellung mitzunehmen, wodurch die Ruhestellung sicher eingenommen werden kann, was insbesondere mit den Merkmalen des Anspruchs 10 erreicht wird.

Zusätzlich oder alternativ kann gemäß Anspruch 11 vorgesehen sein, dass die Spoilerlippe mittels des Halteelements und des Stellelements in aerodynamisch wirksame Zwischenstellungen bewegbar ist, wenn die Spoilerlippe mit dem Halteelement gekoppelt ist. Diese Zwischenstellungen liegen zwischen der Endstellung und der Betriebsstellung des Halteelements. Für diesen Bereich wirkt somit das Halteelement mit dem Stellelement als weiteres Betätigungselement für die Spoilerlippe. Für das weitere Ausfahren der Spoilerlippe in die Wirkstellung wird dann das flexible, aufblasbare Betätigungselement aktiviert.

Die Erfindung wird nachfolgend anhand von Ausführungsbeispielen mit Bezug auf die Zeichnung näher erläutert. Es zeigen:
- Fig. 1: ausschnittweise ein Kraftfahrzeug mit einer Luftleiteinrichtung nach einem ersten Ausführungsbeispiel,
- Fig. 2: ausschnittweise ein Kraftfahrzeug mit einer Luftleiteinrichtung nach einem zweiten Ausführungsbeispiel, wobei eine Spoilerlippe der Luftleiteinrichtung in einer Zwischenstellung vorliegt, und
- Fig. 3: die Luftleiteinrichtung nach Fig. 2 mit einer Spoilerlippe in unterschiedlichen Zwischenstellungen.

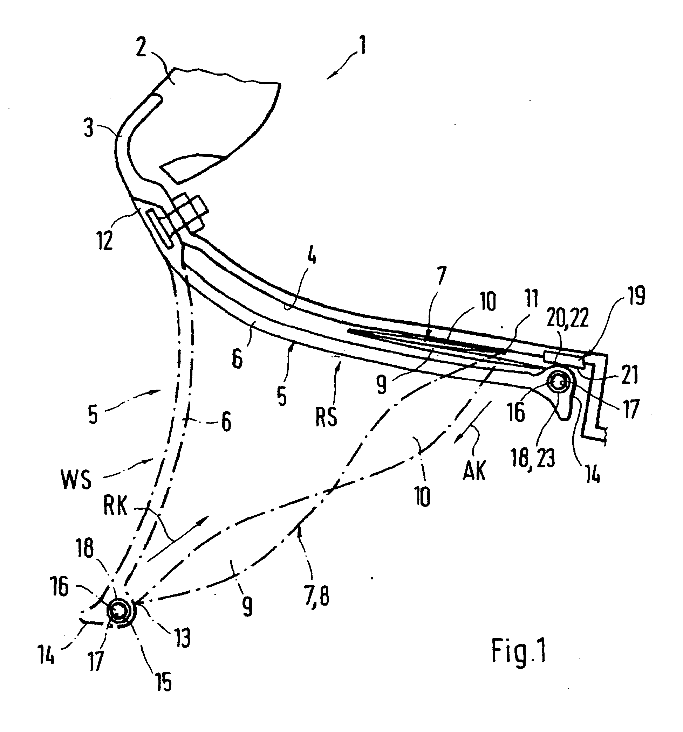

Die Fig. 1 zeigt in einem Längsschnitt durch ein ausschnittweise dargestelltes Kraftfahrzeug 1 eine Frontpartie 2 mit einem auch als Stoßfängerverkleidung bezeichneten Bugverkleidungsteil 3, hinter dem ein hier nicht dargestellter Stoßfängerquerträger angeordnet sein kann. Das Bugverkleidungsteil 3 weist an seiner Unterseite 4 eine auch als Spoiler bezeichnete Luftleiteinrichtung 5 auf, die in einer mit durchgezogener Linie eingezeichneten Ruhestellung RS vorliegt und mit ihrer in Richtung der Fahrzeugbreite (Fahrzeugquerrichtung) verlaufenden Spoilerlippe 6 benachbart zur Unterseite 4 verläuft. In einer strichpunktiert eingezeichneten aerodynamisch wirksamen Wirkstellung WS erstreckt sich die Spoilerlippe 6 nach unten in Richtung einer hier nicht dargestellten Fahrbahn. Zum Bewegen der Spoilerlippe 6 von der eingefahrenen Ruhestellung RS in die ausgefahrene Wirkstellung WS ist die Luftleiteinrichtung 5 mit einem pneumatischen Betätigungselement 7 ausgestattet, das als flexibler, aufblasbarer Schlauch 8 mit zumindest einer Kammer 9 bzw. 10 ausgebildet ist. In Fig. 1 ist das Betätigungselement 7 für die Wirkstellung WS der Spoilerlippe 6 ebenfalls in strichpunktierter Darstellung zu sehen. Dadurch, dass das Betätigungselement 7 als flexibler, aufblasbarer Schlauch 8 ausgebildet ist, kann es nach seiner Entleerung bzw. Druckentlastung zusammengefaltet werden, wie es in durchgezogener Linie in Fig. 1 gezeigt ist. Mit seinem einen Ende 11 ist das Betätigungselement 7 beispielsweise an der Unterseite 4 des Bugverkleidungsteils 3 gehalten. Denkbar wäre es jedoch auch, das Ende 11 benachbart zu einem Befestigungsabschnitt 12 der Spoilerlippe 6 zu befestigen, so dass in der ausgefahrenen Wirkstellung WS die Spoilerlippe und die Kammern 9 und 10 des Schlauches 8 etwa ein Dreieck bilden. Das andere Ende 13 des Betätigungselements 7 ist mit der Spoilerlippe 6, vorzugsweise an deren freien Ende 14, verbunden. Die Spoilerlippe 6 ist in bevorzugter Ausführungsform aus einem dehnbaren und elastischen Material, beispielsweise aus einem EPDM oder dergleichen hergestellt. Benachbart zu ihrem freien Ende 14 weist die Spoilerlippe 6 einen in Fahrzeugquerrichtung verlaufenden Kanal 15 auf, in den ein biegeelastischer Stab 16 eingesetzt ist. Die innere Kanalwand 17 des Kanals 15 kann insbesondere durch ein Führungsmittel 18 gebildet sein, welches beispielsweise als metallisches Element, wie beispielsweise ein biegsames Rohr oder als drahtartiges Element mit einem ähnlich einer Schraubenlinie folgenden gewickelten Draht ausgeführt ist; vorzugsweise wird ein Federstahldraht verwendet. Die Ausgestaltung einer derartigen Luftleiteinrichtung mit einer Spoilerlippe, einem pneumatischen Betätigungselement und einem biegeelastischen Stab ist aus der eingangs erwähnten DE 101 60 748 A1 bekannt, und die DE 103 25 654 A1 beschreibt für eine derartige Luftleiteinrichtung mit einem biegeelastischen Stab ein Führungsmittel für den biegeelastischen Stab, so dass darauf hier nicht näher eingegangen wird.

Dadurch, dass die Spoilerlippe 6 aus einem elastisch dehnbaren Material hergestellt ist, baut sie beim Überführen von der Ruhestellung RS in die ausgefahrene Wirkstellung WS Rückstellkräfte RK auf, von denen wenigstens eine Kraftkomponente die Spoilerlippe 6 bei Druckentlastung des Betätigungselements 7 wieder in Richtung Unterseite 4 drängt, also in die Ruhestellung RS bewegt. Nach diesem Ausführungsbeispiel bildet die elastisch dehnbare Spoilerlippe 6 selbst eine Rückstelleinrichtung, um die Spoilerlippe 6 aus der Wirkstellung WS zurück in die Ruhestellung RS bewegen zu können. Zusätzlich kann die Spoilerlippe 6 bereits in ihrer Ruhestellung RS entsprechend durch ihre dehnbare elastische Ausbildung derart vorgespannt sein, dass sie die Ruhestellung RS vorgespannt beibehält. Mithin bildet die elastisch vorgespannte Spoilerlippe 6 neben der Rückstelleinrichtung auch ein Haltemittel für die Spoilerlippe in der Ruhestellung RS.

Gemäß der Erfindung weist die Luftleiteinrichtung 5 jedoch ein separates Haltemittel 19 auf, welches gegenüber dem in der Spoilerlippe inhärenten Haltemittels unelastisch ausgebildet ist und als Ruhestellungshalter 20 wirkt, der das freie Ende 14 der Spoilerlippe 6 in der Ruhestellung RS hält, in dem der Ruhestellungshalter 20 mit der Spoilerlippe 6 in der Ruhestellung RS gekoppelt ist. Wie Fig. 1 zeigt, liegt die Spoilerlippe 6 mit ihrem freien Ende 14 an dem Ruhestellungshalter 20 an, so dass dieser außerdem einen Endanschlag 21 für die Einfahrbewegung der Spoilerlippe 6 bildet. Soll die Spoilerlippe 6 für eine Ausfahrbewegung von der Ruhestellung RS in die Wirkstellung WS verlagert werden, wird das Betätigungselement 7 aufgeblasen und das freie Ende 14 der Spoilerlippe 6 von dem Ruhestellungshalter 20 entkoppelt. Bei der in umgekehrter Richtung erfolgenden Einfahrbewegung von der Wirkstellung WS in die Ruhestellung RS wird die Spoilerlippe 6 wieder mit dem Ruhestellungshalter 20 gekoppelt, wenn sie ihre Ruhestellung RS erreicht hat.

Der Ruhestellungshalter 20 ist im gezeigten Ausführungsbeispiel als ein an der Unterseite 4 fest angebrachtes magnetisches oder magnetisierbares Halteelement 22 ausgeführt und kann entweder als Dauermagnet oder als ein- und ausschaltbarer Elektromagnet ausgeführt sein. In der Ausführung als Dauermagnet wird das Betätigungselement 7 beim Aufblasen für die Ausfahrbewegung der Spoilerlippe 6 von der Ruhestellung RS in die Wirkstellung WS eine Ausstellkraft AK entwickeln, die größer als die (magnetische) Haltekraft des Halteelements 22 ist, wodurch die Spoilerlippe 6 mit ihrem freien Ende 14 von dem Ruhestellungshalter 20 entkoppelt wird und entsprechend in die Wirkstellung WS ausfahren kann. Denkbar wäre diese Ausführung auch dann, wenn das Halteelement 22 als Elektromagnet ausgeführt ist. Alternativ wäre es denkbar, beim Aufblasen des Betätigungselements 7 den Elektromagneten des Ruhestellungshalters 20 abzuschalten, so dass die Spoilerlippe 6 von dem Ruhestellungshalter 20 entkoppelt und entsprechend in die Wirkstellung WS ausfahren kann. Damit die Spoilerlippe 6 mit dem Ruhestellungshalter 20 gekoppelt werden kann, weist sie im Bereich ihres freien Endes 14 ein entsprechendes magnetisches oder magnetisierbares Gegenelement 23 auf. Insbesondere wird dieses Gegenelement 23 von dem vorstehend beschriebenen metallischen Führungsmittel 18 für den biegeelastischen Stab 16 gebildet.

Dadurch, dass das Haltemittel 19 ein magnetisches Feld aufweist bzw. aufbaut, kann die Spoilerlippe beim Druckentlasten des Betätigungselements 7 beim Einfahren von der Wirkstellung WS in die Ruhestellung RS bereits erfasst werden, wenn die Spoilerlippe 6 ihre endgültige Ruhestellung RS noch nicht eingenommen hat, also das freie Ende 14 mit einem Abstand zu dem Halteelement 20 liegt. Damit wirkt das Haltemittel 22 zusätzlich als Einfahrhilfe für die Spoilerlippe 6, wenn diese beispielsweise aufgrund einer entsprechenden Rückstellkraft RK nicht vollständig in die Ruhestellung RS gebracht wird.

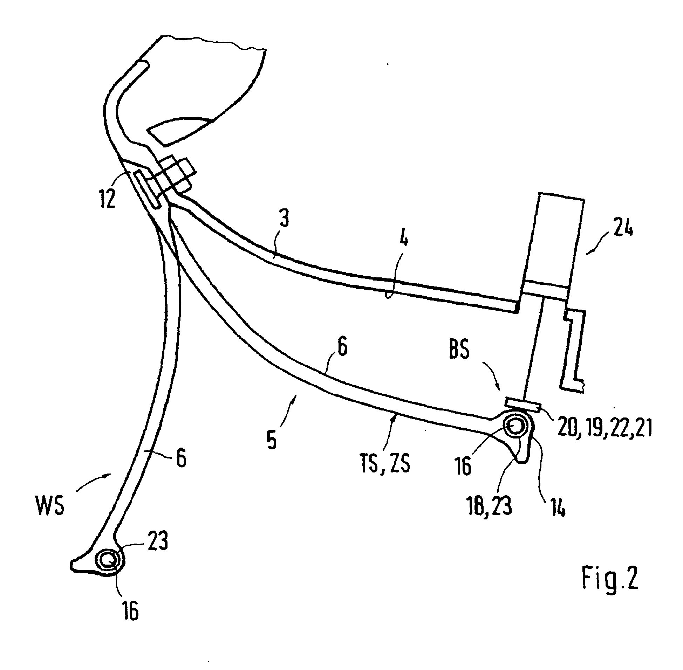

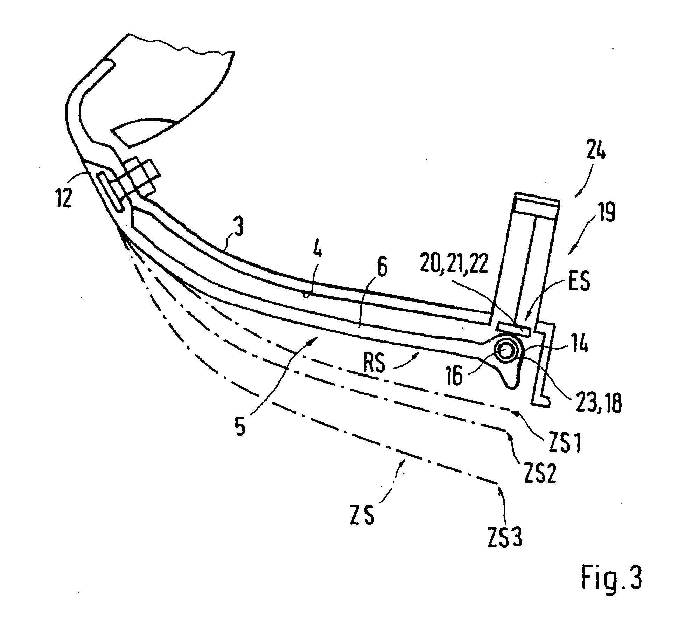

Fig. 2 zeigt ein zweites Ausführungsbeispiel der Luftleiteinrichtung 5 mit einem Haltemittel 19, bei dem der Ruhestellungshalter 20 an einem Stellelement 24 angebracht ist, welches hier als Lineareinheit ausgeführt ist. Mit dem Stellelement 24 ist es möglich, das Halteelement 22 bzw. den Ruhestellungsschalter 20 in eine ausgefahrene Betriebsstellung BS zu verlagern, so dass die Spoilerlippe 6 mit ihrem freien Ende 14 bereits in der in Fig. 2 dargestellten Teilstellung TS erfasst und mit dem Halteelement 22 gekoppelt und durch Einfahren des Halteelements 22 in die Ruhestellung RS mitgenommen wird, die in Fig. 3 zu sehen ist; dabei nimmt das Halteelement 22 seine eingefahrene Endstellung ES ein. So kann die Spoilerlippe 6 in der Teilstellung TS erfasst und durch Zurückbewegen des Halteelements 22 von der ausgefahrenen Betriebsstellung BS in die Endstellung ES die Spoilerlippe 6 in die Ruhestellung RS mitnehmen. Lediglich der Übersichtlichkeit halber ist in den Fig. 2 und 3 das Betätigungselement 7 nicht dargestellt. Ansonsten sind in den Fig. 2 und 3 gleiche bzw. gleichwirkende Bauteile mit denselben Bezugszeichen wie in Fig. 1 versehen.

Anhand von Fig. 3 wird eine weitere Funktion des Stellelements 24 mit dem Haltemittel 19 bzw. Ruhestellungsschalter 20 bzw. Endanschlag 21 bzw. Halteelement 22 näher erläutert. Dadurch, dass das Halteelement 22 mittels des Stellelements 24 ausfahrbar ist, kann ausgehend von der in Fig. 3 dargestellten Ruhestellung RS die Spoilerlippe 6 in unterschiedliche, aerodynamisch unterschiedlich wirkende Zwischenstellungen ZS1, ZS2 und ZS3 verlagert werden, je nach dem wie weit das Halteelement 22 zwischen seiner eingefahrenen Endstellung ES und seiner ausgefahrenen Betriebsstellung BS bewegt wird. Sämtliche Zwischenstellungen zwischen der Endstellung ES und der Betriebsstellung BS sind für die Zwischenstellung ZS möglich. Damit ist es möglich, unterschiedlich wirkende Zwischenstellungen ZS1, ZS2, ZS3 je nach Anforderung an Fahrgeschwindigkeit oder sonstige Fahrzeug- bzw. Fahrwerkparameter einzustellen. Soll die Spoilerlippe 6 ausgehend von einer Zwischenstellung ZS in die Wirkstellung WS ausgefahren werden, wird entsprechend das Betätigungselement 7 aufgeblasen und die Spoilerlippe 6 mit ihrem freien Ende 14 von dem Halteelement 22 entkoppelt, so dass die Wirkstellung WS von der jeweiligen Zwischenstellung ZS aus angefahren werden kann.

## Patentansprüche

1. Luftleiteinrichtung (5) für ein Kraftfahrzeug (1), mit einer sich in Fahrzeugquerrichtung erstreckenden Spoilerlippe (6), einem flexiblen, aufblasbaren Betätigungselement (7) für die Spoilerlippe (6), um die Spoilerlippe (6) aus einer eingefahrenen Ruhestellung (RS) in eine ausgefahrene Wirkstellung (WS) bewegen zu können, mit einer Rückstelleinrichtung für die Spoilerlippe (6), um diese aus der Wirkstellung (WS) zurück in die Ruhestellung (RS) bewegen zu können, und mit einem Haltemittel (19) für die Spoilerlippe (6) in der Ruhestellung (RS), **dadurch gekennzeichnet, dass** das Haltemittel (19) als unelastischer Ruhestellungshalter (20) für die Spoilerlippe (6) ausgebildet ist, der für die Ausfahrbewegung der Spoilerlippe (6) von der Ruhe- in die Wirkstellung (RS, WS) von der Spoilerlippe (6) entkoppelbar und zumindest in der Ruhestellung (RS) der Spoilerlippe (6) wieder mit dieser koppelbar ist.

2. Luftleiteinrichtung (5) nach Anspruch 1, **dadurch gekennzeichnet, dass** der Ruhestellungshalter (20) die Spoilerlippe (6) in der Ruhestellung (RS) gegen einen Endanschlag (21) hält.

3. Luftleiteinrichtung (5) nach Anspruch 1, **dadurch gekennzeichnet, dass** die Rückstelleinrichtung gebildet wird durch die sich während der Ausfahrbewegung vorspannende Spoilerlippe (6), die somit für die Einfahrbewegung wirkende Rückstellkräfte (RK) selbst aufbaut.

4. Luftleiteinrichtung (5) nach Anspruch 1 oder 2, **dadurch gekennzeichnet, dass** der Ruhestellungshalter (20) bei der Einfahrbewegung der Spoilerlippe (6) diese erst in einer kurz vor der Ruhestellung (RS) liegenden Teilstellung (TS) oder in der Ruhestellung (RS) erfasst.

5. Luftleiteinrichtung (5) nach einem der vorhergehenden Ansprüche, **dadurch gekennzeichnet, dass** der Ruhestellungshalter (20) zumindest ein magnetisches oder magnetisierbares Halteelement (22) aufweist, das mit seiner magnetischen Wirkung die Spoilerlippe (6) erfasst und in der Ruhestellung (RS) hält, und dass die Spoilerlippe (6) zumindest ein magnetisches oder magnetisierbares Gegenelement (23) aufweist.

6. Luftleiteinrichtung (5) nach einem der vorhergehenden Ansprüche, **dadurch gekennzeichnet, dass** das Halteelement (22) die Spoilerlippe (6) in der Teilstellung (TS) erfasst und in die Ruhestellung (RS) zieht.

7. Luftleiteinrichtung (5) nach einem der vorhergehenden Ansprüche, **dadurch gekennzeichnet, dass** der Ruhestellungshalter (20), insbesondere das Halteelement (22), selbst den Endanschlag bildet.

8. Luftleiteinrichtung (5) nach einem der vorhergehenden Ansprüche, **dadurch gekennzeichnet, dass** das Haltelement (22) aktivierbar und deaktivierbar ist.

9. Luftleiteinrichtung (5) nach einem der vorhergehenden Ansprüche, **dadurch gekennzeichnet, dass** das Haltelement (22) an einem Stellelement (24) befestigt ist und aus einer eingefahrenen Endstellung (21) in eine ausgefahrene Betriebsstellung und umgekehrt verlagerbar ist.

10. Luftleiteinrichtung (5) einem der vorhergehenden Ansprüche, **dadurch gekennzeichnet, dass** das Halteelement (22) in seiner Betriebsstellung die Spoilerlippe (6) in der Teilstellung (TS) erfasst und hält und durch Zurückbewegen des Halteelements (22) in die eingefahrene Endstellung (21) die Spoilerlippe (6) in die Ruhestellung (RS) mitnimmt.

11. Luftleiteinrichtung (5) einem der vorhergehenden Ansprüche, **dadurch gekennzeichnet, dass** die Spoilerlippe (6) mittels des Halteelements (22) und Stellelements (24) in zumindest eine aerodynamisch wirksame Zwischenstellung bewegbar ist, die zwischen der Endstellung (21) und der Betriebsstellung des Halteelements (22) liegt.

## Claims

1. Air guiding device (5) for a motor vehicle (1), having a spoiler lip (6) which extends in the vehicle transverse direction, having a flexible, inflatable actuating element (7) for the spoiler lip (6) in order to be able to move the spoiler lip (6) from a retracted rest position (RS) into a deployed active position (WS), having a restoring device for the spoiler lip (6) in order to be able to move the latter from the active position (WS) back into the rest position (RS), and having a holding means (19) for the spoiler lip (6) in the rest position (RS), **characterized in that** the holding means (19) is designed as an inelastic rest position holder (20) for the spoiler lip (6), which rest position holder (20) can be decoupled from the spoiler lip (6) for the deploying movement of the spoiler lip (6) from the rest position (RS) into the active position (WS), and can be coupled to the spoiler lip (6) again at least in the rest position (RS) of the spoiler lip (6).

2. Air guiding device (5) according to Claim 1, **characterized in that** the rest position holder (20) holds the spoiler lip (6) in the rest position (RS) against an end stop (21).

3. Air guiding device (5) according to Claim 1, **characterized in that** the restoring device is formed by the spoiler lip (6) which becomes preloaded during the deploying movement, and which thereby itself builds up the restoring forces (RK) which act for the retraction movement.

4. Air guiding device (5) according to Claim 1 or 2, **characterized in that**, during the retraction movement of the spoiler lip (6), the rest position holder (20) engages the latter only in a partial position (TS) situated a short distance before the rest position (RS), or in the rest position (RS).

5. Air guiding device (5) according to one of the preceding claims, **characterized in that** the rest position holder (20) has at least one magnetic or magnetizable holding element (22) which, by means of its magnetic action, engages the spoiler lip (6) and holds it in the rest position (RS), and **in that** the spoiler lip (6) has at least one magnetic or magnetizable counterpart element (23).

6. Air guiding device (5) according to one of the preceding claims, **characterized in that** the holding element (22) engages the spoiler lip (6) in the partial position (TS) and pulls said spoiler lip (6) into the rest position (RS).

7. Air guiding device (5) according to one of the preceding claims, **characterized in that** the rest position holder (20), in particular the holding element (22), itself forms the end stop.

8. Air guiding device (5) according to one of the preceding claims, **characterized in that** the holding element (22) can be activated and deactivated.

9. Air guiding device (5) according to one of the preceding claims, **characterized in that** the holding element (22) is fastened to an actuating element (24) and can be moved from a retracted end position (21) into a deployed operating position and vice versa.

10. Air guiding device (5) according to one of the preceding claims, **characterized in that** the holding element (22), in its operating position, engages and holds the spoiler lip (6) in the partial position (TS), and, by means of a movement of the holding element (22) back into the retracted end position (21), pulls the spoiler lip (6) into the rest position (RS).

11. Air guiding device (5) according to one of the preceding claims, **characterized in that** the spoiler lip (6) can be moved by means of the holding element (22) and actuating element (24) into at least one aerodynamically active intermediate position situated between the end position (21) and the operating position of the holding element (22).

## Revendications

1. Dispositif de guidage d'air (5) pour un véhicule automobile (1), avec une lèvre de déflecteur d'air (6) s'étendant dans la direction transversale du véhicule, un élément d'actionnement (7) flexible, gonflable, prévu pour la lèvre de déflecteur d'air (6), pour permettre de déplacer la lèvre de déflecteur d'air (6) d'une position de repos (RS) rentrée dans une position active (WS) sortie, avec un dispositif de rappel prévu pour la lèvre de déflecteur d'air (6), pour lui permettre de revenir de la position active (WS) dans la position de repos (RS) et avec un moyen d'arrêt (19) prévu pour la lèvre de déflecteur d'air (6) lorsqu'elle est dans la position de repos (RS), **caractérisé en ce que** le moyen d'arrêt (19) prend la forme d'un cadre support de position de repos (20) inélastique pour la lèvre de déflecteur d'air (6) qui peut être découplé de la lèvre de déflecteur d'air (6), pour le mouvement de sortie de la lèvre de déflecteur d'air (6) de la position de repos dans la position active (RS, WS), et être recouplé à elle au moins dans la position de repos (RS) de la lèvre de déflecteur d'air (6).

2. Dispositif de guidage d'air (5) selon la revendication 1, **caractérisé en ce que** dans la position de repos (RS), le cadre support de position de repos (20) maintient la lèvre de déflecteur d'air (6) contre une butée d'extrémité (21).

3. Dispositif de guidage d'air (5) selon la revendication 1, **caractérisé en ce que** le dispositif de rappel est formé par la lèvre de déflecteur d'air (6) se tendant pendant le mouvement de sortie et créant ainsi elle-même les forces de rappel (RK) agissant pour réaliser le mouvement de rentrée.

4. Dispositif de guidage d'air (5) selon la revendication 1 ou 2, **caractérisé en ce que** le cadre support de position de repos (20) saisit la lèvre de déflecteur d'air (6) en présence d'un mouvement de rentrée de celle-ci, dans une position intermédiaire (TS) située juste avant la position de repos (RS) ou dans la position de repos (RS).

5. Dispositif de guidage d'air (5) selon l'une quelconque des revendications précédentes, **caractérisé en ce que** le cadre support de position de repos (20) comporte au moins un élément d'arrêt (22) magnétique ou magnétisable qui saisit, du fait de son action magnétique, la lèvre de déflecteur d'air (6) et la maintient dans la position de repos (RS) et que la lèvre de déflecteur d'air (6) comporte au moins un contre-élément (23) magnétique ou magnétisable.

6. Dispositif de guidage d'air (5) selon l'une quelconque des revendications précédentes, **caractérisé en ce que** l'élément d'arrêt (22) agrippe la lèvre de déflecteur d'air (6) dans la position intermédiaire (TS) et l'attire dans la position de repos (RS).

7. Dispositif de guidage d'air (5) selon l'une quelconque des revendications précédentes, **caractérisé en ce que** le cadre support de position de repos (20), notamment l'élément d'arrêt (22), forme lui-même la butée d'extrémité.

8. Dispositif de guidage d'air (5) selon l'une quelconque des revendications précédentes, **caractérisé en ce que** l'élément d'arrêt (22) peut être activé et désactivé.

9. Dispositif de guidage d'air (5) selon l'une quelconque des revendications précédentes, **caractérisé en ce que** l'élément d'arrêt (22) est fixé au niveau d'un élément de réglage (24) et peut être déplacé d'une position terminale (21) rentrée dans une position de fonctionnement sortie et inversement.

10. Dispositif de guidage d'air (5) selon l'une quelconque des revendications précédentes, **caractérisé en ce que** l'élément d'arrêt (22) saisit et maintient, dans sa position de fonctionnement, la lèvre de déflecteur d'air (6) dans la position intermédiaire (TS) et qu'il engrène la lèvre de déflecteur d'air (6) dans la position de repos (RS) en ramenant en arrière l'élément d'arrêt (22) dans la position terminale (21) rentrée.

11. Dispositif de guidage d'air (5) selon l'une quelconque des revendications précédentes, **caractérisé en ce que** la lèvre de déflecteur d'air (6) peut être déplacée dans au moins une position intermédiaire aérodynamique active à l'aide de l'élément d'arrêt (22) et de l'élément de réglage (24), ladite position étant située entre la position terminale (21) et la position de fonctionnement de l'élément d'arrêt (22).
